(19) Europäisches Patentamt
European Patent Office
Office européen des brevets

(11) Veröffentlichungsnummer: **0 086 971**
**B1**

# (12) EUROPÄISCHE PATENTSCHRIFT

(45) Veröffentlichungstag der Patentschrift: **12.03.86**

(51) Int. Cl.⁴: **C 08 L 75/04**, C 08 G 18/77, C 08 G 18/71

(21) Anmeldenummer: **83100582.2**

(22) Anmeldetag: **24.01.83**

(54) **Verwendung von Isocyanato-silanen als die Lagerstabilität erhöhende Zusatzmittel in, Polyurethanpolymere mit freien Isocyanatgruppen aufweisenden, Zubereitungen.**

(30) Priorität: **06.02.82 DE 3204128**

(43) Veröffentlichungstag der Anmeldung: **31.08.83 Patentblatt 83/35**

(45) Bekanntmachung des Hinweises auf die Patenterteilung: **12.03.86 Patentblatt 86/11**

(84) Benannte Vertragsstaaten: **DE FR GB IT**

(56) Entgegenhaltungen:
**DE - B - 1 205 099**
**US - A - 4 308 071**

(73) Patentinhaber: **BAYER AG, Konzernverwaltung RP Patentabteilung, D-5090 Leverkusen 1 Bayerwerk (DE)**

(72) Erfinder: **Fauss, Rudolf, Dr., Gerstenkamp 10, D-5000 Köln 80 (DE)**
Erfinder: **Sonntag, Michael, Dr., Gartenstrasse 27a, D-5068 Odenthal 2 (DE)**
Erfinder: **Wagner, Kuno, Dr., Am Kiesberg 8, D-5090 Leverkusen 1 (DE)**
Erfinder: **Findeisen, Kurt, Dr., In der Follmuehle 10, D-5068 Odenthal 2 (DE)**
Erfinder: **Mennicken, Gerhard, Dr., Am Wasserturm 16, D-5090 Leverkusen 3 (DE)**

**EP 0 086 971 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft die Verwendung von Isocyanato-silanen als die Lagerstabilität erhöhende Zusatzmittel in flüssigen oder pastenförmigen, Polyurethanprepolymere mit freien Isocyanatgruppen aufweisenden Zubereitungen.

Es ist aus der DE-C-1 245 590 bekannt, hochreaktive Sulfonylisocyanate — besonders Tosylisocyanat — als wasserbindendes Mittel in Polyurethanprepolymere mit freien Isocyanatgruppen aufweisenden Zubereitungen einzusetzen.

Die Verwendung derartiger, hochreaktiver Monoisocyanate in Lacksystemen verhindert z.B. auf bisher vorteilhafteste Weise unerwünschte Nebenreaktionen des eventuell in Lösungsmitteln oder Pigmenten noch enthaltenden Wassers. In der Praxis sind jedoch mit der Verwendung von Tosylisocyanat als Zusatzmittel für Lackkompositionen auch Nachteile verbunden, wie die DE-A-2 539 728 lehrt.

So enthält das handelsübliche Tosylisocyanat gelegentlich Spuren des bei seiner Herstellung ebenfalls entstehenden Tosylchlorids, was bei der Verwendung des Tosylisocyanats unter Umständen zu Geruchsbelästung führen kann. Das bei der Reaktion des Tosylisocyanats mit Wasser entstehende Tosylamid kann darüber hinaus wegen seiner ausgeprägten Kristallisationstendenz zu Stippenbildung im Lack führen. Ausserdem bewirkt das Tosylamid oft eine Reaktionshemmung der Polyurethan-Lackkompositionen.

Die Handhabung des hochreaktiven Tosylisocyanates bedarf ausserdem bestimmter Sicherheitsmassnahmen. So muss beispielsweise eine Berührung mit reinem Wasser vermieden werden, da es sonst zu einer ausserordentlich heftigen Reaktion kommt.

Die DE-A-2 539 728 empfiehlt daher, anstelle des Tosylisocyanates bestimmte Alkoxycarbonylisocyanate zu verwenden.

Der Nachteil der Alkoxycarbonylisocyanate ist indessen in ihrer umständlichen Herstellung unter Verwendung meist teurer Ausgangssubstanzen zu sehen. So muss beim Verfahren gemäss J. Org. Chem. 30, (1965), Seiten 4306-4307 zur Herstellung der Alkoxycarbonylisocyanate ein vorab hergestelltes, N-unsubstituiertes Urethan mit Oxalylchlorid zur Umsetzung gebracht werden. Beim Verfahren der DE-B-1 793 088 ist die Verwendung von Chlorcarbonyl-isocyanat und beim Verfahren der DE-A-1 900 755 bzw. der DE-B-1 768 179 der Einsatz von Chlorcarbonyl-isocyanid-dichlorid erforderlich.

Es war daher die Aufgabe der vorliegenden Erfindung, ein wirksames, auf einfache Weise zugängliches wasserbindendes Zusatzmittel für, Polyurethanprepolymere mit freien Isocyanatgruppen aufweisende, Zubereitungen aufzufinden, welches nicht mit den genannten Nachteilen behaftet ist.

Überraschenderweise wurde nunmehr gefunden, dass Isocyanato-silane den genannten Anforderungen genügen.

Die gute Trockenwirkung der erfindungsgemäss zu verwendenden Isocyanato-silane war nicht direkt zu erwarten, weil viele Vertreter dieser Substanzklasse — z.B. Trimethyl-isocyanato-silan — mit Wasser nur sehr langsam reagieren.

Durch die Reaktion mit Wasser entstehen z.B. aus Dimethyl-diisocyanato-silan Polysiloxane. Diese Endprodukte sind Bestandteil von Trennmitteln, so dass bei Verwendung von mit Silylisocyanat versetzten Prepolymeren, welche anschliessend zu Lacken verarbeitet werden mit Haftungsproblemen zu rechnen war.

Überraschenderweise stellte sich jedoch heraus, dass Isocyanato-silane ausgezeichnete Trockenmittel in NCO-Prepolymeren darstellen und nicht mit dem letztgenannten Nachteil behaftet sind.

Gegenstand der Erfindung ist daher die Verwendung von Isocyanato-silanen als die Lagerstabilität erhöhende Zusätze in flüssigen oder pastenförmigen, gegebenenfalls lösungsmittelhaltigen, klaren oder pigmentierten, Polyurethanprepolymere mit freien Isocyanatgruppen aufweisenden Zubereitungen.

Die Verwendung hat gegenüber der bisher praktizierten Verwendung von Sulfonyl- bzw. Alkoxycarbonylisocyanaten für den gleichen Zweck folgende Vorteile:

1. Die Synthese der Verbindungen ist einfach. Sie erfolgt beispielsweise durch Umsetzung der Silylhalogenide mit Alkalicyanaten wie z.B. in der DE-OS 1 695 741 oder von W. Noll in «Chemie und Technologie der Silicone», Verlag Chemie, Weinheim, 2. Auflage (1968), Seiten 98-100 beschrieben ist.
2. Zur Erzielung viskositätsstabiler Formulierungen von pigmentierten feuchtigkeitshärtenden Einkomponentenlacken benötigt man wesentlich geringere Zusatzmengen, wenn man anstelle des Tosylisocyanats bzw. des Isooctyloxicarbonylisocyanates, z.B. Trimethyl-isocyanato-silan und/oder Dimethyl-diisocyanato-silan verwendet.
3. Isocyanato-silane sind sicherheitstechnisch einfacher zu handhaben. Wird z.B. konzentriertes Trimethyl-isocyanato-silan oder Dimethyl-diisocyanato-silan versehentlich mit Wasser zusammen gebracht, so erfolgt nicht wie beim konzentrierten Tosylisocyanat eine heftige Reaktion. Bei Verwendung von Trimethyl-isocyanato-silan ist die Reaktion sogar bedeutend langsamer als bei den Alkoxycarbonyl-isocyanaten.
4. Bei der Langzeitstabilisierung zeigen Flüssigkeitsproben sowohl bei Raumtemperaturlagerung (20°C) als auch bei Lagerung bei erhöhter Temperatur (50°C) eine wesentlich verbesserte Viskositätsstabilität gemessen im DIN Becher 4 gemäss DIN 53211, sofern anstatt Tosylisocyanat Isocyanato-silane eingesetzt werden.
5. Bei der Verseifung der Isocyanato-silane entstehen keine Produkte, welche zu unerwünschten Effekten im Lack (z.B. Stippenbildung) führen.
6. Die Verseifungsprodukte der Isocyanato-silane weisen praktisch keine Reaktionshemmung bezüglich der bei der Härtung der Lackkomposition ablaufenden Reaktion auf. Bedingt durch die geringe Menge wird in die Lackkomposition auch

weniger Fremdkörper eingebracht, was viele Eigenschaften, z.B. Wasserfestigkeit oder Migration, positiv beeinflusst.

Erfindungsgemäss können beliebige Isocyanato-silane Verwendung finden. Vorzugsweise werden jedoch Isocyanato-silane der Formel

$$R_nSi(NCO)_{4-n}$$

eingesetzt, in welcher,

R für einen Alkylrest mit 1 - 6 Kohlenstoffatomen, insbesondere einen Methylrest steht und

n für 0 oder eine ganze Zahl von 1 bis 3, vorzugsweise für 2 oder 3 steht.

Selbstverständlich können auch Gemische verschiedener derartiger Isocyanato-silane Verwendung finden. Typische Beispiele geeigneter Isocyanato-silane sind Tetraisocyanato-silan, Methyl-triisocyanato-silan, n-Hexyl-triisocyanato-silan, Methyl-ethyl-diisocyanato-silan, Dimethyl-diisocyanato-silan oder Trimethyl-isocyanato-silan. Die beiden letztgenannten Silane sind besonders bevorzugt.

Bei den erfindungsgemäss zu stabilisierenden, Polyurethanprepolymere mit freien Isocyanatgruppen aufweisenden Zubereitungen handelt es sich um flüssige oder pastenförmige, gegebenenfalls lösungsmittelhaltige, klare oder pigmentierte, sowie gegebenenfalls weitere in der Lacktechnologie übliche Hilfs- und Zusatzmittel aufweisende Systeme, die als wesentliche Komponente Polyurethanprepolymere mit freien Isocyanatgruppen als Bindemittel enthalten. Bei den Polyurethanprepolymeren mit freien Isocyanatgruppen handelt es sich um die an sich bekannten Umsetzungsprodukte von organischen Polyisocyanaten mit unterschüssigen Mengen an Polyhydroxylverbindungen. Bei den erfindungsgemäss zu stabilisierenden Zubereitungen handelt es sich in erster Linie um, derartige Prepolymere als Bindemittel enthaltende, Einkomponenten-Polyurethanlacke der beispielsweise in DE-PS 1 245 590 oder US-PS 3 479 325 beschriebenen Art. Bei der erfindungsgemässen Verwendung können die erfindungswesentlichen Zusatzmitteln beispielsweise den gebrauchsfertigen Zubereitungen (Einkomponentenlacken) oder den zu ihrer Herstellung verwendeten Ausgangsmaterialien (Pigmenten, Lösungsmitteln oder Bindemitteln) zugesetzt werden. Die Menge der erfindungsgemäss einzusetzenden Zusatzmittel richtet sich in erster Linie nach dem Wassergehalt der zu stabilisierenden Zubereitungen bzw. der zu ihrer Herstellung eingesetzten Einzelkomponenten. Sie liegt im allgemeinen bei 0,05 - 5, vorzugsweise 0,5 - 4 Gew.-%, bezogen auf das Gesamtgewicht der gebrauchsfertigen Zubereitungen (Einkomponentenlacke).

In besonderen Fällen kann es zweckmässig sein, neben den erfindungswesentlichen Isocyanato-silanen Sulfonylisocyanate der in DE-PS 1 245 590 genannten Art, insbesondere p-Tolylsulfonylisocyanat (Tosylisocyanat) in den in DE-PS 1 245 590 angegebenen Mengen den zu stabilisierenden Zubereitungen bzw. den zu ihrer Herstellung verwendeten Einzelkomponenten zuzumischen.

Wird z.B. Tosylisocyanat und Dimethyl-diisocyanato-silan zu ungefähr gleichen Gewichtsteilen abgemischt, so kann hiermit auch ein hochreaktives Lacksystem problemlos stabilisiert werden. Die Abmischung ist aber aufgrund der deutlich abgeschwächten Reaktivität gegenüber reinem Wasser sicherheitstechnisch einfacher zu handhaben.

Die erfindungsgemässe Verwendung ermöglicht eine Erhöhung der Viskositäts- bzw. Lagerstabilität von flüssigen oder pastenförmigen, lösungsmittelhaltigen oder lösungsmittelfreien, klaren oder pigmentierten Polyurethanprepolymer-Zubereitungen mit freien Isocyanatgruppen. Vorzugsweise werden die an sich bekannten und in der DE-PS 1 245 590 bzw. in der US-PS 3 479 325 beispielhaft beschriebenen lösungsmittelhaltigen Einkomponenten-Polyurethanlacke erfindungsgemäss stabilisiert.

Die durch die erfindungsgemässe Verwendung zu erzielenden Vorteile geben auch aus den nachfolgenden Beispielen hervor.

In den folgenden Ausführungsbeispielen 1A bis 5C wurde jeweils die Wirkung von Trimethyl-isocyanato-silan (V) und/oder Dimethyl-diisocyanato-silan (IV) mit der Wirkung von Tosylisocyanat (III) bzw. Isooctyloxycarbonylisocyanat (XVII) als Stabilisierungsmittel verglichen. Die angegebenen Zahlenwerte in den Rezepturangaben beziehen sich auf Gewichtsteile.

In den Beispielen werden folgende Materialien eingesetzt:

I: 60%ige Lösung in Xylol eines NCO-Prepolymeren mit einem NCO-Gehalt von 5,4 Gew.-% (bezogen auf Lösung) hergestellt durch Umsetzung von 7,0 Mol 2,4-Diisocyanato-toluol mit einer Mischung auf 1,8 Mol Trimethylolpropan, 0,9 Mol Diethylenglykol und 0,9 Polypropylenglykol des Molgewichts 1000

II: 85%ige Lösung eines handelsüblichen Steinkohlenteers in Xylol

III: Tosylisocyanat

IV: Dimethyl-diisocyanato-silan

V: Trimethyl-isocyanato-silan

VI: handelsübliches Entlüftungsmittel auf Polyacrylatbasis, 10%ige Lösung in Ethylenglykolmonoethyletheracetat

VII: Antisedimentationsmittel (Aluminiumsilikat vom Typ Montmorillonit), 10%ige Aufschlemmung in Xylol

VIII: Talcum

IX: Synthetisches Eisenoxid-Pigment

X: Eisenglimmer (kristalliner lamellarer Hämatit)

XI: nicht aufschwimmende Aluminium-Bronze, ca. 40%ig in Xylol

XII: Kohlenwasserstoff-Lösungsmittelgemisch mit einem Aromatengehalt von 97% und einem Siedebereich von 165°C-178°C

XIII: Xylol

XIV: Ethylenglykolmonoethyletheracetat

XV: 60%ige Lösung in Ethylglykolmonoethyletheracetat/Xylol (1 : 1) eines Umsetzungsproduktes aus 75 Gew.-Teilen eines biuretisierten Hexamethylendiisocyanats mit einem NCO-Gehalt von 22 Gew.-% mit 25 Gew.-Teilen eines Polyesters aus 5 Mol Phthalsäureanhydrid, 1 Mol Trimethylolpropan und 5 Mol Hexamethylenglykol. Das Umsetzungsprodukt wurde aus den Ausgangsmaterialien durch zweistündiges Erhitzen auf 80°C hergestellt. Es weist einen NCO-Gehalt von 9,5% auf

XVI: 10%ige Lösung von Dibutylzinndilaurat in Ethylglykolmonoethyletheracetat

XVII: Isooctyloxicarbonylisocyanat

XVIII: Siliconharz zur Oberflächenvergütung

XIX: Entschäumer für organische Systeme

XX: handelsübliches Titandioxid-Pigment (Rutil-Typ)

Die in der Tabelle 1 zusammengefassten Beispiele 1A bis 3C zeigen die Stabilisierung eines pigmentierten NCO-Prepolymeren mit aromatisch gebundenen Isocyanatgruppen. Die angegebenen Ausgangsmaterialien wurden in einem Schnellrührer während 15 Minuten vermengt. Hierbei steigt die Temperatur des Gemisches auf ca. 50°C an. Nach Abkühlen auf 23°C wurde die erste Viskositätsmessung durchgeführt. Weitere Viskositätsmessungen erfolgten bei 23°C nach 16stündiger Lagerung bei 80°C und/oder nach 7tägiger Lagerung bei 80°C. Die Ergebnisse sind in Tabelle 1 zusammengestellt. Bei allen 3 verschiedenen Rezepturen führt das Weglassen der Stabilisierungsmittel III, IV oder V zur Gelierung.

Tabelle 1

| | Beispiel 1 A | 1 B | 1 C | 2 A | 2 B | 2 C | 3 A | 3 B | 3 C |
|---|---|---|---|---|---|---|---|---|---|
| I | 38,13 | 38,13 | 38,13 | 28,22 | 28,22 | 28,22 | 35,79 | 35,79 | 35,79 |
| II | | | | 20,20 | 20,20 | 20,20 | | | |
| III | 2,59 | | | 1,92 | | | 1,67 | | |
| IV | | 2,59 | | | 1,92 | | | 1,67 | |
| V | | | 2,59 | | | 1,92 | | | 1,67 |
| VI | 0,23 | 0,23 | 0,23 | 0,36 | 0,36 | 0,36 | 0,21 | 0,21 | 0,21 |
| VII | 11,65 | 11,65 | 11,65 | 13,75 | 13,75 | 13,75 | 8,69 | 8,69 | 8,69 |
| VIII | 26,21 | 26,21 | 26,21 | 27,39 | 27,39 | 27,39 | 22,03 | 22,03 | 22,03 |
| IX | 8,09 | 8,09 | 8,09 | | | | | | |
| X | | | | 14,58 | 14,58 | 14,58 | | | |
| XI | | | | | | | 6,75 | 6,75 | 6,75 |
| XII | 11,81 | 11,81 | 11,81 | | | | 8,22 | 8,22 | 8,22 |
| XIII | | | | 9,49 | 9,49 | 9,49 | | | |
| XIV | | | | | | | 4,11 | 4,11 | 4,11 |
| Charakterisierung des Flüssiglackes hinsichtlich Viskosität η (mPas) DIN 53019 (Rotationsvisk.) | | | | | | | | | |
| 0 h, 23°C | 1000 | 900 | 300 | 1000 | 600 | 1000 | 800 | 700 | 400 |
| 16 h, 80°C | | | | | | | 1200 | 1100 | 1000 |
| 7 d, 50°C | 1400 | 1300 | 500 | 2100 | 1100 | 2000 | 3000 | 1500 | 1000 |

Zur Herstellung der Lacke wurden die Komponenten mit Ausnahme des Katalysators XVI wie oben beschrieben in einem Schnellrührer vermengt. Nach Abkühlen wird der Katalysator eingerührt und sofort die erste Viskositätsbestimmung durchgeführt. Die Messergebnisse sind in Tabelle 2 zusammengefasst.

Tabelle 2

| | Beispiel 4 A | 4 B | 4 C | 4 D | 4 E | 4 F | 4 G | 4 H | 4 J | 4 K |
|---|---|---|---|---|---|---|---|---|---|---|
| XV | 100 | 100 | 100 | 100 | 100 | 100 | 100 | 100 | 100 | 100 |
| XIV + $H_2O$* | 50 | 50 | 50 | 50 | 50 | 50 | 50 | 50 | 50 | 50 |
| XVI | 6 | 6 | 6 | 6 | 6 | 6 | 6 | 6 | 6 | 6 |
| III | | 12 | | | | | | | | 2,4 |

Tabelle 2 (Fortsetzung)

| | Beispiel 4 A | 4 B | 4 C | 4 D | 4 E | 4 F | 4 G | 4 H | 4 J | 4 K |
|---|---|---|---|---|---|---|---|---|---|---|
| XVII | | | 12 | | | | | | | |
| V | | | | 12 | | | | | | |
| IV | | | | | 12 | 8,4 | 6 | 3,6 | 2,4 | |
| Charakterisierung des Flüssiglackes hinsichtlich Viskosität | | | | | | | | | | |
| Auslaufzeit nach DIN 53211 im DIN-Becher 4 (Sekunden) | | | | | | | | | | |
| 0 h, 23°C | 17″ | 16″ | 15″ | 15″ | 15″ | 15″ | 15″ | 15″ | 15″ | 20″ |
| 16 h, 50°C** | 163″ | 20″ | 16″ | 20″ | 16″ | 17″ | 18″ | 18″ | 18″ | 86″ |

*) Gemisch aus 100 Gew.-Teilen XIV und 1 Gew.-Teil Wasser

**) Die Viskositätsbestimmungen erfolgten bei 23°C nach der angegebenen Lagerung während 16 h bei 50°C.

Die in Tabelle 3 zusammengefassten Beispiele 5 A bis 5 C zeigen die Stabilisierung eines pigmentierten NCO-Prepolymeren mit aliphatisch gebundenen Isocyanatgruppen. Zur Herstellung der Lacke wurden alle Komponenten mit Ausnahme des Kat. XVI wie beschrieben in einem Schnellrührer vermengt. Nach Abkühlen wird der Katalysator eingerührt und sofort die erste Viskositätsbestimmung durchgeführt. Die Messergebnisse sind in Tabelle 3 zusammengefasst.

Tabelle 3

| | Beispiel 5 A | 5 B | 5 C |
|---|---|---|---|
| XV | 135,8 | 135,8 | 135,8 |
| VII | 8,26 | 8,26 | 8,26 |
| XVIII | 0,33 | 0,33 | 0,33 |
| XIX | 8,26 | 8,26 | 8,26 |
| XX | 57,85 | 57,85 | 57,85 |
| XVI | 0,83 | 0,83 | 0,83 |
| III | | 7,27 | |
| IV | | | 7,27 |
| Charackterisierung des Flüssiglackes hinsichtlich Viskosität | | | |
| η (mPas) | | | |
| DIN 53019 (Rotationsvisk.) | | | |
| 0 h, 23°C | 500 | 400 | 450 |
| 16 h, 80°C* | 1050 | 400 | 500 |
| 7 d, 50°C* | geliert | 500 | 550 |

* Die Viskositätsbestimmungen erfolgten bei 23°C nach der angegebenen Lagerung bei 80°C bzw. 50°C.

**Patentansprüche**

1. Verwendung von Isocyanato-silanen als die Lagerstabilität erhöhende Zusätze in flüssigen oder pastenförmigen, gegebenenfalls lösungsmittelhaltigen, klaren oder pigmentierten, Polyurethanprepolymere mit freien Isocyanatgruppen aufweisenden Zubereitungen.

2. Verwendung gemäss Anspruch 1, dadurch gekennzeichnet, dass man als Isocyanato-silane solche der Formel

$$R_nSi(NCO)_{4-n}$$

in welcher
R für einen Alkylrest mit 1 - 6 Kohlenstoffatomen, steht
und
n für 0 oder eine ganze Zahl von 1 bis 3 steht, einsetzt.

3. Verwendung gemäss Anspruch 1 und 2, dadurch gekennzeichnet, dass man als Isocyanatosilane solche der in Anspruch 2 genannten Formel verwendet, wobei
R für eine Methylgruppe
und
n für eine ganze Zahl von 2- 3 steht.

**Claims**

1. Use of isocyanato-silanes as additives increasing storage stability in liquid or pasty, clear or pigmented preparations which contain polyurethane prepolymers having free isocyanate groups and optionally contain a solvent.

2. Use according to claim 1, characterised in that the isocyanato-silanes used are those of the formula

$$R_nSi(NCO)_{4-n}$$

in which
R represents an alkyl radical with 1 - 6 carbon atoms and
n represents 0 or an integer from 1 - 3.

3. Use according to claim 1 and 2, characterised in that the isocyanato-silane used are those of the formula given in claim 2, wherein
R represents a methyl group
and
n represents an integer from 2 - 3.

**Revendications**

1. Utilisation d'isocyanato-silanes comme additifs augmentant la stabilité au stockage dans des compositions liquides ou pâteuses, transparentes ou pigmentées, contenant éventuellement un solvant, comportant des prépolymères de polyuréthannes à groupes isocyanates libres.

2. Utilisation selon la revendication 1, caractérisée en ce que l'on utilise des isocyanato-silanes de formule:

$$R_nSi(NCO)_{4-n}$$

dans laquelle

R représente un reste alkyle en $C_1$-$C_6$ et

n représente 0 ou un entier de 1 à 3.

3. Utilisation selon la revendication 1 ou 2, caractérisée en ce que l'on utilise des isocyanato-silanes répondant à la formule indiquée dans la revendication 2, dans laquelle

R représente un groupe méthyle et

n est égal à 2 ou 3.